# NEUE EUROPÄISCHE PATENTSCHRIFT

(11) **EP 2 195 267 B2**
(45) Veröffentlichungstag und Bekanntmachung des Hinweises auf die Entscheidung über den Einspruch: **07.11.2018**
(45) Hinweis auf die Patenterteilung: 02.03.2011
(21) Anmeldenummer: 08716450.5
(22) Anmeldetag: 12.03.2008
(51) Int. Cl.: B65G 59/04, B65G 61/00, B21D 43/24, B65H 3/08

(54) **VERFAHREN ZUM ENTSTAPELN VON PLATTENFÖRMIGEN TEILEN**
METHOD FOR UNSTACKING PLATE-SHAPED PARTS
PROCÉDÉ DE DÉSEMPILAGE DE PIÈCES EN FORME DE PLAQUES

(43) Veröffentlichungstag der Anmeldung: 16.06.2010
(73) Patentinhaber: Schuler Automation GmbH & Co. KG, 91093 Hessdorf (DE)
(72) Erfinder: DÖRNER, Reiner, 75031 Eppingen (DE); POTTIEZ, Joachim, 75056 Sulzfeld (DE)
(74) Vertreter: Patentanwälte Magenbauer & Kollegen Partnerschaft mbB
(86) Internationale Anmeldenummer: PCT/EP2008/001943
(87) Internationale Veröffentlichungsnummer: WO 2009/112050

(56) Entgegenhaltungen:
- EP-A- 0 535 654
- EP-A1- 0 535 654
- WO-A-02/08100
- WO-A1-2006/128393
- DE-A1- 3 020 218
- DE-A1- 3 817 117
- DE-A1- 10 312 927
- DE-A1- 19 856 151
- DE-U1- 20 121 077
- US-A1- 2006 099 064
- ABB-KUNDENZEITSCHRIFT "CONNECT", OKTOBER 2006

## Beschreibung

Die Erfindung umfasst ein Verfahren zum Entstapeln von plattenförmigen Teilen, insbesondere Metallblechplatinen.

Aus der DE 103 12927 A1 ist eine Vereinzelungsvorrichtung zum Vereinzeln von Blechplatinen bekannt.

Derartige Entstapelvorrichtungen sind insbesondere auf dem Gebiet der Automatisierungstechnik seit langem bekannt. Beispielsweise werden sie in sogenannten Pressenstrassen dazu verwendet, gestapelte Metallblechplatinen aus einem Teilestapel zu entnehmen und in eine Förderstation abzulegen, von wo aus dann die vereinzelten bzw. entstapelten Metallblechplatinen zur nächsten Station gelangen, bis sie schließlich der Umformpresse zugeführt werden. Hierbei werden beispielsweise sogenannte "Overhead Feeder" eingesetzt, mit einem an einem Portal verfahrbaren Sauger-Tooling, dass beispielsweise in Kreuzschlittenbauweise in X, Y und Z-Richtung verfahrbar ist, wodurch eine exakte Positionierung über dem Teilestapel möglich ist. Die Metallblechplatinen werden dann mittels des Sauger-Toolings angesaugt und zur Förderstation gefahren, wo sie dann abgelegt werden.

Allerdings ist bei einer derartigen Enstapelvorrichtung die Teilezahl, die in einer bestimmten Zeit zwischen der Vorratsstation und der Förderstation bewegt werden kann - in der Regel wird dies in strokes per minute (spm) angegeben - begrenzt.

Ferner ist es aus dem Stand der Technik bekannt, plattenförmige Teile, insbesondere Metallblechplatinen, mittels eines Magnetbandförderers zwischen einer Vorratsstation und einer Förderstation zu befördern. Die WO 2006/128393 A1 offenbart einen Platinenlader, bei der Platinen an zwei Entstapelstellen mittels Robotern entstapelt werden, die im Wechsel die Platine anheben und diese nach einer Schwenkbewegung auf das Förderband auflegen.

Aufgabe der Erfindung ist es, ein Verfahren zu schaffen, mit dem die Anzahl an plattenförmigen Teilen, die in einem bestimmten Zeitabschnitt aus einem Teilestapel entstapelt und an eine Förderstation übergeben werden können, gegenüber dem Stand der Technik gesteigert werden kann.

Diese Aufgabe wird mit einem Verfahren zum Entstapeln von plattenförmigen Teilen mit den Merkmalen des unabhängigen Anspruchs 1 gelöst. Eine Weiterbildung der Erfindung ist in dem Unteranspruch dargestellt.

Eine nicht zur Erfindung gehörende Vorrichtung zum Entstapeln von plattenförmigen Teilen zeichnet sich dadurch aus, dass die Entstapeleinheit zwei unabhängig voneinander arbeitende Roboter aufweist, die im Wechsel auf wenigstens einen gemeinsamen Teilestapel einer Vorratsstation zugreifen und über eine Steuereinrichtung derart angesteuert sind, dass ein erster oder ein zweiter Roboter wenigstens ein plattenförmiges Teil aus dem Teilestapel entnimmt während gleichzeitig der zweite oder der erste Roboter wenigstens ein aufgenommenes plattenförmiges Teil an der Förderstation ablegt.

Durch die beiden im Wechsel zugreifenden Roboter können Teilestapel an plattenförmigen Teilen also wesentlich schneller als aus dem Stand der Technik bekannt, abgetragen werden. Dadurch lassen sich die Taktzeiten beim Entstapeln erhöhen. Außerdem werden die beiden Roboter derart angesteuert, dass sie synchron arbeiten, nämlich während der eine Roboter ein plattenförmiges Teil aufnimmt, legt der andere Roboter gleichzeitig ein bereits aufgenommenes Teil ab. Dadurch werden Stillstandzeiten vermieden, das heißt keiner der Roboter muss darauf warten, dass der jeweils andere Roboter seine Arbeitsbewegung ausgeführt hat, bevor er seinerseits seine Arbeitsbewegung ausführen kann. Durch den Einsatz von Robotern zum Entstapeln ist zudem eine hohe Flexibilität gegeben, da die zu entstapelnden plattenförmigen Teile bei Bedarf beispielsweise auch gedreht werden können. Die plattenförmigen Teile können also in umorientierter Lage bzw. anderer Lageausrichtung in die Förder- bzw. Transferstation abgelegt werden.

Zweckmäßigerweise umfasst die Teile-Überführung von der Vorratsstation zur Förderstation bzw. die Rückführung von der Förderstation zur Vorratsstation eine Schwenkbewegung der beiden Roboter. Schwenkbewegungen beanspruchen wenig Platz, so dass es auch möglich ist, bei baulich beengten Platzverhältnissen Entstapelvorgänge durchzuführen.

In bevorzugter Weise wird von den Robotern pro Takt jeweils ein einzelnes plattenförmiges Teil aus dem Teilestapel entnommen. Prinzipiell ist es jedoch auch möglich, dass zwei oder mehr nebeneinanderliegende Teilestapel bedient werden, von wo aus dann gleichzeitig die jeweils obersten plattenförmigen Teile durch den gerade tätigen Roboter entnommen werden.

Die beiden Roboter können jeweils als Mehrachs-Knickroboter ausgebildet sein, mit wenigstens vier Schwenkachsen, von denen eine erste vertikale Schwenkachse die zwischen der Vorratsstation und der Förderstation stattfindende Schwenkbewegung ermöglicht. Durch die mindestens vier Achsen ist ein positionsgenaues Zustellen der Roboter an den Teilestapel bzw. an eine Ablegestelle in der Förderstation möglich, um dann mittels einer definierten Hubbewegung die plattenförmigen Teile aufzunehmen bzw. im Falle der Förderstation abzulegen. Zweckmäßigerweise werden fünf, sechs oder gar Sieben-Achs-Knickroboter verwendet.

In besonders bevorzugter Weise weist die Entstapeleinheit eine Linearführungseinrichtung zur horizontalen Linearführung der beiden Roboter zwischen der Vorratsstation und der Förderstation auf. Die Roboter können also eine zusätzliche Linear- bzw. X-Achse besitzen, so dass auch nicht im Schwenkbereich der jeweiligen Roboter liegende Abstände zwischen der Vorratsstation und der Förderstation mittels kombinierter Schwenk- und Linearbewegung überbrückt werden können.

Besonders bevorzugt ist wenigstens einer der Roboter hängend an einer Trageinrichtung angeordnet. Vorteilhafterweise sind beide Roboter hängend angeordnet. Alternativ ist jedoch auch eine stehende Anordnung wenigstens eines Roboters möglich.

Die Erfindung umfasst ein Verfahren zum Entstapeln von plattenförmigen Teilen, insbesondere Metallblechplatinen, das sich durch folgende Verfahrensschritte auszeichnet:
- Bereitstellen wenigstens eines Teilestapels an plattenförmigen Teilen,
- Entnehmen wenigstens eines plattenförmigen Teiles aus dem Teilestapel durch einen ersten Roboter während gleichzeitig wenigstens ein anderes bereits aufgenommenes Teil durch einen unabhängig vom ersten Roboter arbeitenden zweiten Roboter an einer Ablegestelle abgelegt wird,

- Überführen des durch den ersten Roboter aufgenommenen wenigstens einen Teiles an die Ablegestelle durch eine Überführungsbewegung, die ein Verschwenken des ersten Roboters umfasst, wobei der erste Roboter beim Überführen zusätzlich zur Schwenkbewegung linear zwischen dem zugeordneten Teilestapel und der Ablegestelle verfahren wird, während gleichzeitig der zweite Roboter unbestückt von der Ablegestelle an den Teilestapel, aus dem zuvor schon der erste Roboter entnommen hat, mittels einer ein Verschwenken des zweiten Roboters umfassenden Rückführbewegung rückgeführt wird, wobei der zweite Roboter zusätzlich zur Schwenkbewegung linear zwischen dem zugeordneten Teilestapel und der Ablegestelle verfahren wird,
- Ablegen des vom ersten Roboter aufgenommen wenigstens einen Teils an der Ablegestelle, während gleichzeitig ein plattenförmiges Teil aus dem Teilestapel durch den zweiten Roboter entnommen wird.

Ein bevorzugtes Ausführungsbeispiel der Erfindung ist in der Zeichnung dargestellt und wird im Folgenden näher erläutert. In der Zeichnung zeigen:
- Figur 1: eine Seitenansicht auf ein bevorzugtes Ausführungsbeispiel der Vorrichtung zum Entstapeln von plattenförmigen Teilen und
- Figur 2: eine Ansicht in Durchlaufrichtung auf die Vorrichtung zum Entstapeln von Figur 1.

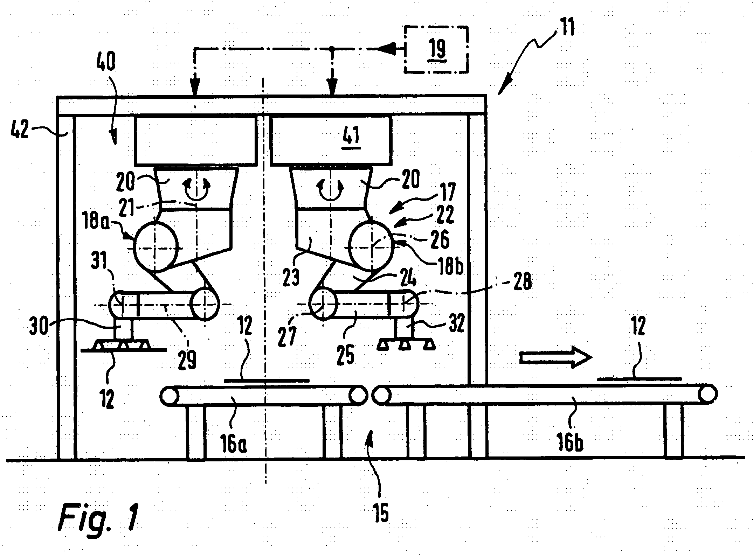

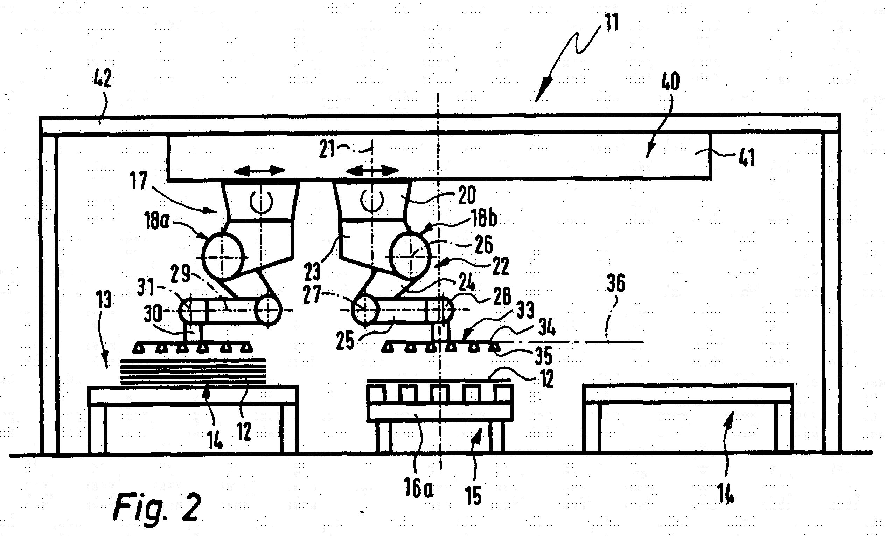

Die Figuren 1 und 2 zeigen ein bevorzugtes Ausführungsbeispiel der erfindungsgemäßen Vorrichtung 11 zum Entstapeln von plattenförmigen Teilen 12. Als plattenförmige Teile 12 sind dabei Metallblechplatinen vorgesehen, beispielsweise nicht umgeformte Karosseriebleche. Die Vorrichtung zum Entstapeln, die im Folgenden der Einfachheithalber als Entstapelvorrichtung 11 bezeichnet wird, ist Teil einer Pressenstrasse, in deren Verlauf die plattenförmigen Teilen 12 letztendlich in eine Umformpresse gelangen und dort umgeformt werden.

Die Entstapelvorrichtung 11 besitzt wenigstens eine Vorratsstation 13, in der sich wenigstens ein Teilestapel 14 an plattenförmigen Teilen 12 befindet. Beispielhaft ist hier eine Vorratsstation 13 in Form einer tischartigen Teile-Lagereinheit dargestellt, die gegebenenfalls linear verfahrbar ist. Selbstverständlich ist es möglich, dass die Entstapelvorrichtung 11 mehrere Vorratsstationen 13 aufweist. In der Vorratsstation 13 liegen die plattenförmigen Teilen 12 im Teilestapel 14 horizontal übereinander gestapelt.

Die Entstapelvorrichtung 11 besitzt ferner wenigstens eine Förderstation 15, an der die plattenförmigen Teilen 12 entstapelt abgelegt und weitertransportiert werden. In der Regel werden die entstapelten bzw. vereinzelten plattenförmigen Teilen 12 in eine Zentrier- bzw. Positionierstation befördert, in der sie dann lagegenau ausgerichtet werden können, um anschließend in die Umformpresse weitertransportiert werden zu können. Die Förderstation 15 ist hier beispielhaft in Form miteinander korrespondierender Förderbänder 16a, 16b dargestellt, wobei ein entstapeltes plattenförmiges Teil 12 auf ein erstes Ablageförderband 16a abgelegt wird und von dort auf ein Zubringer-Förderband 16b gelangt, von wo aus dann ein Weitertransport in die nächste Station, beispielsweise in die Zentrierstation, erfolgt.

Zum Überführen der plattenförmigen Teilen 12 zwischen der Vorratsstation 13 und der Förderstation 15 ist eine Entstapeleinheit 17 vorgesehen, die auf den Teilestapel 14 zugreift und stückweise plattenförmige Teile 12, den Teilestapel 14 entstapelnd entnimmt und in die Förderstation 15 ablegt. Herzstück der Entstapeleinheit sind zwei unabhängig voneinander arbeitende Roboter 18a, 18b, die im Wechsel auf einen gemeinsamen Teilestapel 14 der Vorratsstation 13 zugreifen und über eine Steuereinrichtung 19 derart angesteuert sind, dass ein erster oder ein zweiter der Roboter 18a, 18b ein plattenförmiges Teil 12 aus dem Teilestapel 14 entnimmt, während gleichzeitig der zweite oder der erste Roboter 18a, 18b ein aufgenommenes plattenförmiges Teil an der Förderstation 15 ablegt.

Die beiden Roboter 18a, 18b sind jeweils als Mehrachs-Knickroboter ausgebildet, die hier beispielhaft in siebenachsiger Ausführung dargestellt sind. Ferner sind die beiden Roboter 18a, 18b an einer Trägereinheit 42 hängend angeordnet. Ein jeweiliger Roboter 18a, 18b besitzt eine Roboterbasis 20, an der eine um eine in Gebrauchslage vertikale erste Schwenkachse 21 schwenkbare Bewegungseinheit 22 schwenkbar gelagert ist, die zunächst ein basisseitiges Schwenkteil enthält, das um die vertikale erste Schwenkachse 21 verschwenkbar an der Roboterbasis 20 sitzt. Die Bewegungseinheit 22 enthält ferner einen von einem Oberarm 24 und einem Unterarm 25 gebildeten Knickarm. Der Oberarm 24 des Knickarms ist einenends um eine in Gebrauchslage horizontale zweite Schwenkachse 26 verschwenkbar mit dem Schwenkteil und andernends um eine horizontale dritte Achse 27 verschwenkbar mit dem zugewandten Ende des Unterarms 25 verbunden.

Zur Bewegungseinheit 22 gehört ferner ein an dem Oberarm 24 entgegengesetzten Ende des Unterarms 25 angeordnetes Drehglied 28, das um eine in Längsrichtung des Unterarms 25 verlaufende vierte Achse 29 verdrehbar ist. An dem Unterarm 25 entgegengesetzten Ende des Drehglieds 28 ist ein Schwenkglied 30 angeordnet, das um eine quer zur vierten Achse 29 verlaufende fünfte Achse 31 verschwenkbar mit dem Drehglied 28 verbunden ist.

An das Schwenkglied 30 ist ein um eine quer zur fünften Achse 31 verlaufende sechste Achse 32 verdrehbares Rotationsglied (nicht dargestellt) angesetzt, an dem ein Tragteil 33 befestigt ist, so dass das Tragteil 33 die Drehbewegung des Rotationsglieds mitmacht. Das Tragteil 33 trägt vorzugsweise eine Hebeeinrichtung 34 mit Vakuumsaugern 35. Die Anordnung ist dabei so getroffen, dass sich das Tragteil 33 in Richtung der sechsten Achse 32 vom Schwenkglied 30 bzw. von an diesem sitzenden Rotationsglied weg erstreckt und dass die Hebeeinrichtung 34 ein die Vakuumsauger haltende Halteeinrichtung enthält, die um eine quer zur sechsten Achse 32 gerichtete siebte Achse 36 verdrehbar mit dem Tragteil 33 verbunden ist. Bezüglich weiterer und näherer Details über den Aufbau und den Bewegungsablauf eines solchen siebenachsigen Knickroboters wird im Übrigen auf die EP 1 623 773 verwiesen.

Die Entstapeleinheit 17 besitzt ferner eine Linearführungseinrichtung 40 zur horizontalen Linearführung der beiden Roboter 18a, 18b zwischen der Vorratsstation 13 und der Förderstation 15. Zur Linearführungseinrichtung 40 gehört die Roboterbasis 20, die schlittenartig ausgeführt ist und an Führungsschienen linear geführt ist, die ihrerseits wiederum an einem Schienenmodul 41 sitzen.

Die Schienenmodule 41 sind wiederum an einer portalartigen Trageinrichtung 42 befestigt. Die beiden Roboter haben also jeweils eine zusätzliche Achse, nämlich eine Verfahrachse in X-Richtung.

Zum Entstapeln von plattenförmigen Teilen 12 wird zunächst an der Vorratsstation 13 ein Teilestapel 14 an plattenförmigen Teilen 12 bereitgestellt, wobei die plattenförmigen Teilen horizontal übereinandergestapelt sind.

Der erste Roboter 18a entnimmt nun eines der plattenförmigen Teile indem die Vakuumsauger 35 das zugeordnete plattenförmigen Teile 12 ansaugen. Gleichzeitig legt der zweite Roboter 18b ein bereits aufgenommenes plattenförmiges Teil 12 unabhängig vom ersten Roboter 18a auf dem Ablage-Förderband 16a der Förderstation 15 ab.

Als Nächstes wird nun das durch den ersten Roboter 18a aufgenommene plattenförmige Teil 12 durch Verschwenken der Bewegungseinheit des Roboters 18a um die erste Schwenkachse 21, gegebenenfalls mit zusätzlich überlagerter Linearfahrbewegung, zur Förderstation 15 überführt, während gleichzeitig der zweite Roboter 18b unbestückt von der Förderstation 15 ebenfalls durch Verschwenken seiner Bewegungseinheit 22 um die erste Schwenkachse 21, gegebenenfalls mit überlagerter Linearfahrbewegung, zur Vorratsstation zurückschwenkt.

Schließlich wird das durch den ersten Roboter 18a aufgenommene plattenförmige Teil 12 an der Förderstation 15 auf dem Ablage-Förderband 16a abgelegt, während gleichzeitig durch den zweiten Roboter 18b ein plattenförmiges Teil aus dem Teilestapel 14 an der Vorratsstation 13 aufgenommen wird. Die Steuereinrichtung 19 steuert die beiden Roboter 18a, 18b also derart an, dass eine synchrone Bewegung stattfindet, das heißt während der eine Roboter plattenförmige Teile 12 aus dem Teilestapel 14 aufnimmt legt gleichzeitig der andere Roboter 18b plattenförmige Teile 12 an der Förderstation 15 ab. Da beide Roboter 18a, 18b im Wechsel auf eine Teilestapel 14 zugreifen, führt dies zu einer wesentlichen Erhöhung der Taktzeit beim Entstapeln von plattenförmigen Teilen 12. Durch die Synchronisation der Bewegungen wird außerdem erreicht, dass es keine Stillstandszeiten bei den Bewegungsabläufen der beiden Roboter 18a, 18b gibt.

Ist der Teilestapel 14 entstapelt können die beiden Roboter 18a, 18b auf den nächsten Teilestapel 14 zugreifen, der an einer anderen Vorratsstation zur Verfügung gestellt ist. Befindet sich diese neue Vorratsstation nicht im Schwenkbereich der beiden Roboter 18a, 18b, so werden beide Roboter 18a, 18b zunächst linear in den Bereich dieser Vorratsstation gefahren.

## Patentansprüche

1. Verfahren zum Entstapeln von plattenförmigen Teilen (12), insbesondere Metallblechplatinen, das Verfahren mit folgenden Schritten:
- Bereitstellen wenigstens eines Teilestapels (14) an plattenförmigen Teilen (12),
- Entnehmen wenigstens eines plattenförmigen Teiles (12) aus dem Teilestapel (14) durch einen ersten Roboter (18a) während gleichzeitig wenigstens ein anderes, bereits aufgenommenes Teil (12) durch einen unabhängig vom ersten Roboter (18a) arbeitenden zweiten Roboter (18b) an einer Ablegestelle abgelegt wird,
- Überführen des durch den ersten Roboter (18a) aufgenommen wenigstens einen Teiles (12) an die Ablegestelle durch eine Überführungsbewegung, die ein Verschwenken des ersten Roboters (18a) umfasst, wobei der erste Roboter (18) beim Überführen zusätzlich zur Schwenkbewegung linear zwischen dem zugeordneten Teilestapel (14) und der Ablegestelle verfahren wird, während gleichzeitig der zweite Roboter (18b) unbestückt von der Ablegestelle an den Teilestapel (14), aus dem zuvor schon der erste Roboter (18a) entnommen hat, mittels einer ein Verschwenken des zweiten Roboters (18b) umfassenden Rückführbewegung rückgeführt wird, wobei der zweite Roboter (18b) zusätzlich zur Schwenkbewegung linear zwischen dem zugeordneten Teilestapel (14) und der Ablegestelle verfahren wird,
- Ablegen des vom ersten Roboter (18a) aufgenommenen wenigstens einen Teiles (12) an der Ablegestelle, während gleichzeitig ein plattenförmiges Teil (12) aus dem Teilestapel durch den zweiten Roboter (18b) entnommen wird.

2. Verfahren nach Anspruch 1, **dadurch gekennzeichnet, dass** wenigstens einer der Roboter (18a, 18b) in hängender Anordnung arbeitet.

## Claims

1. Method for de-stacking plate-shaped parts (12), in particular sheet metal blanks, the method comprising the following steps:
- the provision of at least one parts stack (14) of plate-shaped parts (12),
- the removal of at least one plate-shaped part (12) from the parts stack (14) by a first robot (18a), while simultaneously another part (12) which has already been picked up is deposited at a delivery point by a second robot (18b) operating independently of the first robot (18a),
- the transfer of the part or parts (12) picked up by the first robot (18a) to the delivery point in a transfer action involving a pivoting of the first robot (18a), wherein the first robot (18) in addition to its pivoting movement, is traversed during transfer in a linear motion between the assigned parts stack (14) and the delivery point, while the second robot (18b) is simultaneously returned in an unloaded state from the delivery point to the parts stack (14) from which the first robot (18a) has removed a part by means of a return motion involving a pivoting of the second robot (18b), wherein the second robot (18b), in addition to the pivoting movement, is traversed in a linear motion between the assigned parts stack (14) and the delivery point,
- the deposition of the part or parts (12) picked up by the first robot (18a) at the delivery point, while a plate-shaped part (12) is simultaneously removed from the parts stack by the second robot (18b).

2. Method according to claim 1, **characterised in that** at least one of the robots (18a, 18b) operates in a suspended arrangement.

## Revendications

1. Procédé de désempilage de pièces en forme de plaques (12), en particulier de platines de tôle métallique, le procédé avec les étapes suivantes :
- fourniture d'au moins une pile de pièces (14) de pièces en forme de plaques (12),
- prélèvement d'au moins une pièce en forme de plaque (12) de la pile de pièces (14) par un premier robot (18a) pendant qu'en même temps au moins une autre pièce (12) déjà reçue est déposée à un lieu de dépose par un deuxième robot (18b) travaillant indépendamment du premier robot (18a),
- transfert de l'au moins une pièce (12) reçue par le premier robot (18a) au lieu de dépose par un mouvement de transfert, qui comprend un pivotement du premier robot (18a), dans lequel le premier robot (18) est déplacé lors du transfert en plus du mouvement de pivotement de manière linéaire entre la pile de pièces associée (14) et le lieu de dépose, pendant qu'en même temps le deuxième robot (18b) non équipé est ramené du lieu de dépose à la pile de pièces (14), de laquelle le premier robot (18a) a déjà prélevé auparavant, au moyen d'un mouvement de retour comprenant un pivotement du deuxième robot (18b), dans lequel le deuxième robot (18b) est déplacé en plus du mouvement de pivotement de manière linéaire entre la pile de pièces associée (14) et le lieu de dépose,
- dépose de l'au moins une pièce (12) reçue par le premier robot (18a) au lieu de dépose, pendant qu'en même temps une pièce en forme de plaque (12) est prélevée de la pile de pièces par le deuxième robot (18b).

2. Procédé selon la revendication 1, **caractérisé en ce qu'**au moins un des robots (18a, 18b) travaille en agencement suspendu.
